# FASCICULE DE BREVET EUROPEEN

(11) **EP 1 318 251 B1**
(45) Date de publication et mention de la délivrance du brevet: **12.03.2008**
(21) Numéro de dépôt: 02292990.5
(22) Date de dépôt: 04.12.2002
(51) Int. Cl.: F16B 7/04

(54) **Articulation de sécurité notamment pour les rambardes d'échafaudage**
Sicherheitsgelenk für Geländer von Gerüsten
Safety folding joint for railings of scaffolding

(30) Priorité: 07.12.2001 FR 0115853
(43) Date de publication de la demande: 11.06.2003
(73) Titulaire: Société Anonyme dite Tubesca, 93135 Noisy-Le-Sec (FR)
(72) Inventeur: Manier, Francis, 80680 Sains-en-Amienois (FR)
(74) Mandataire: Roger, Walter

(56) Documents cités:
- GB-A- 711 184
- US-A- 5 485 655

## Description

L'invention concerne une articulation de sécurité notamment pour les rambardes d'échafaudage.

Dans l'état de la technique proche, on connaît des articulations pour rambardes d'échafaudage, dont la charnière constitutive comporte un unique axe d'articulation, la rotation pouvant éventuellement être indexée et verrouillée à l'aide d'un bouton poussoir. Ces articulations présentent deux inconvénients principaux. D'une part, les éléments de rambarde de part et d'autre de l'articulation ne peuvent pas être repliés parallèlement l'un à l'autre, ce qui ne permet pas de stocker les éléments de rambarde dans l'espace minimal et d'autre part, la liaison des éléments de rambarde l'un à l'autre repose sur l'axe de charnière uniquement, ce qui au niveau de la sécurité de liaison ne confère pas une protection maximale.

L'invention vise à remédier à ces inconvénients et propose une articulation de sécurité notamment pour les rambardes d'échafaudage, constituées au moins de deux éléments tubulaires de rambarde articulés l'un à l'autre, dressés l'un en continuité de l'autre en service et repliés en position hors service, caractérisée en ce qu'elle est constituée de deux éléments de charnière complémentaires fixés chacun à l'une des extrémités opposées des éléments tubulaires de rambarde, et d'une pièce en U pourvue d'au moins deux oreilles opposées sur l'une au moins des branches du U et articulées chacune à une des deux extrémités opposées des éléments tubulaires de rambarde dans le plan de rotation desdits éléments de charnière, la partie médiane du U étant conformée pour bloquer l'articulation dans un sens d'appui du plan de rotation verrouillant les éléments de rambarde sensiblement l'un en continuité de l'autre, par exemple en ligne droite, et l'axe d'articulation des éléments de charnière est mobile et verrouille en service l'articulation, de sorte que les éléments de rambarde sont verrouillés totalement en continuité l'un de l'autre en position de service, ledit axe mobile pouvant être extrait des éléments de charnière pour permettre de replier parallèlement les éléments de rambarde en les articulant chacun à ladite au moins une oreille de la pièce en U.

Selon des caractéristiques avantageuses de l'invention, la pièce en U comporte quatre oreilles identiques, opposées deux à deux et articulées deux à deux, respectivement, aux extrémités des éléments tubulaires de rambarde. L'axe mobile est constitué par une goupille à fil flexible de verrouillage et les deux éléments de charnière sont identiques.

Naturellement, la partie médiane du U est orientée vers le haut pour verrouiller les éléments de rambarde dans le sens d'appui utile, vers le bas, et le fil flexible de la goupille est orienté vers le bas à l'opposé, pour verrouiller en position l'axe des éléments de charnière.

Il résulte de cette disposition que les éléments de rambarde sont reliés l'un à l'autre par une double articulation, celle des éléments de charnière et celle de la pièce en U, ce qui accroît la sécurité de la liaison et protège du risque de rupture brutale.

L'invention est illustrée ci-après plus en détail à l'aide d'un exemple de réalisation et en référence aux dessins annexés, sur lesquels :
- La figure 1 est une vue en perspective d'une articulation de rambarde d'échafaudage selon l'invention en position de service,
- La figure 2 est une vue analogue en position repliée hors service,
- La figure 3 est une vue montrant les éléments de l'articulation,
- La figure 4 est une vue en perspective d'un élément de charnière constitutif, et
- La figure 5 est une vue en perspective de la pièce en U.

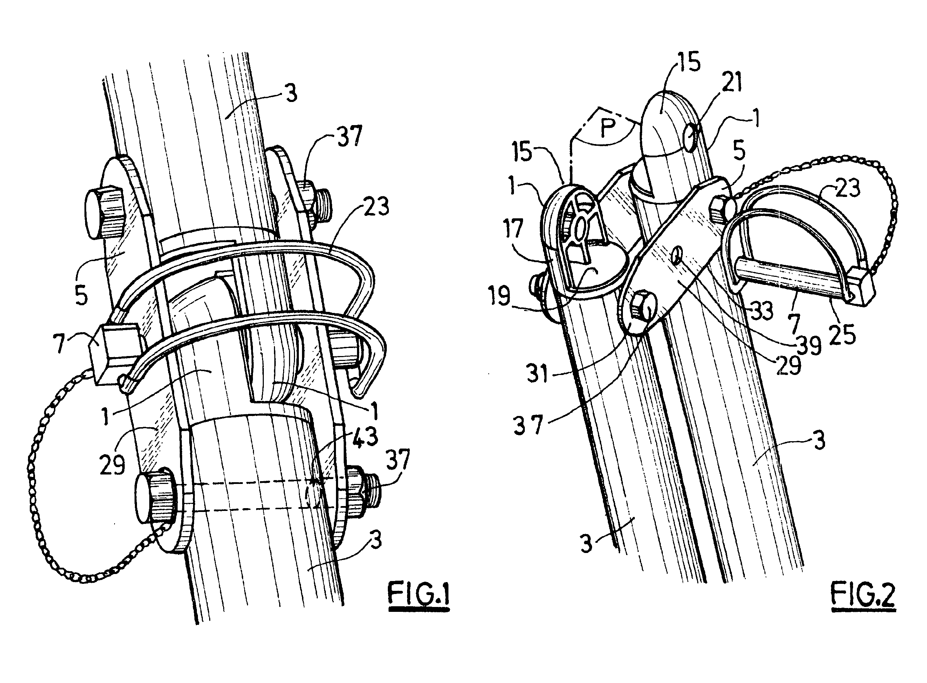

Avec référence aux figures 1 à 5 des dessins, l'articulation de rambarde d'échafaudage selon l'invention est constituée essentiellement de deux éléments de charnière 1 fixés chacun à l'extrémité de deux éléments de rambarde identiques 3 d'un échafaudage, d'une pièce en U 5 articulée à l'extrémité des éléments de rambarde 3, et d'une goupille mobile 7 formant axe d'articulation verrouillée des éléments de charnière.

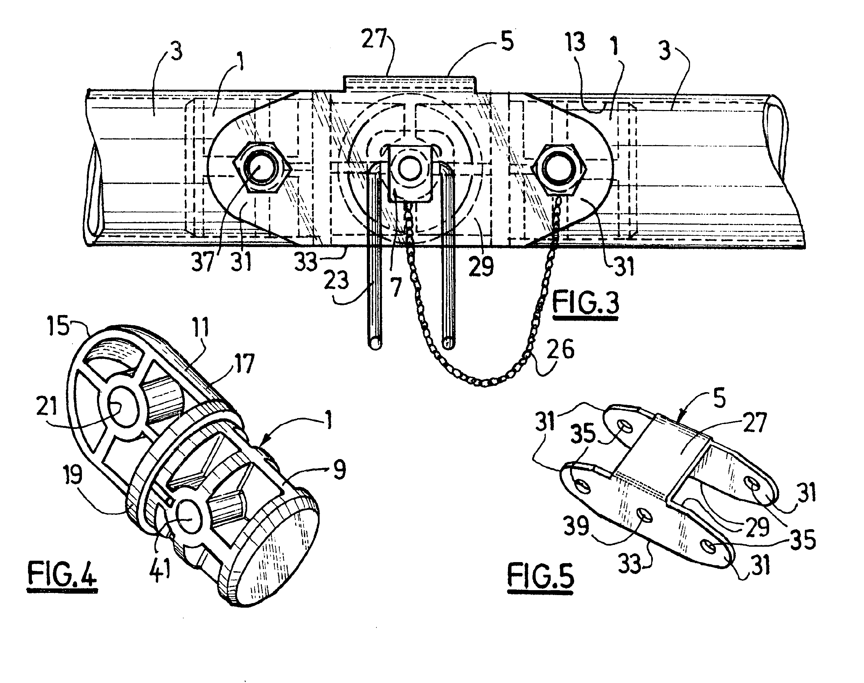

Les éléments de charnière 1 (figure 4), identiques l'un à l'autre pour chaque élément de rambarde, et issus de moulage en matière synthétique ou alliage métallique léger comportent un embout de fixation arrière 9 et une tête d'articulation 11 à l'avant.

L'embout 9 a une section complémentaire de celle de l'alésage des éléments tubulaires de rambarde 3 et une longueur relativement faible de un à plusieurs centimètres selon le diamètre de tube de l'élément de rambarde. Cet embout 9 est destiné à être emmanché à force dans l'alésage 13 de l'élément tubulaire de rambarde.

La tête d'articulation 11 est destinée à venir sur un côté du plan transversal de rotation P de l'articulation pour coopérer avec la tête opposée 11 de l'élément de charnière de l'autre côté du plan. Elle comporte une extrémité avant 15 conformée en quart de sphère et un corps demi cylindrique 17 relié à l'embout arrière 9. Une plaque médiane circulaire 19 de diamètre légèrement supérieure à l'alésage 13 de l'élément de rambarde délimite la tête avant de l'embout arrière. Cette plaque 19 forme butée d'emmanchement de l'embout dans le tube de rambarde. Enfin, la tête comporte un trou d'axe cylindrique central 21, les deux têtes d'élément de charnière s'accouplant en service pour recevoir la goupille d'axe 7.

Cette goupille est du type à fil flexible 23 de verrouillage de l'axe, le corps 25 de ce dernier dépassant latéralement de chacune des têtes 11 et le fil 23 articulé à l'une des extrémités du corps revient en boucle à prise élastique sur l'autre extrémité du corps. Le goupillage et le dégoupillage sont obtenus par manoeuvre de ce fil flexible 23. Cette goupille est reliée à une chaînette 26, elle même solidaire de la pièce en U, de sorte qu'elle ne puisse être perdue et qu'elle soit utilisée dans tous les cas.

La pièce en U 5 (figure 5) est en métal. Elle comporte une partie en plat médian 27 et deux branches latérales 29 identiques, parallèles et perpendiculaires au plat médian 27. Chacune des extrémités 31 des branches est à forme arrondie elliptique, reliée l'une à l'autre opposée par un segment droit médian 33. Les extrémités 31 des branches ou oreilles (pouvant être indépendantes l'une de l'autre et reliées au plat médian 27 seules) comportent un trou d'axe médian 35, lequel reçoit avec l'oreille en vis à vis l'axe d'articulation de l'élément de rambarde correspondant. Cet axe est en fait un simple boulon 37 monté traversant dans chacune des extrémités d'élément de rambarde et dans chaque embout 9 d'élément de charnière et serré sur l'une des branches de la pièce en U.

Un autre trou 39 est formé au niveau médian sur chacune des branches du U. Les trous 39 reçoivent la goupille 7, parallèlement et en alignement des axes d'articulation des extrémités 31 de branche.

Le montage de l'articulation est à présent décrit. Il résulte de la description précédente et est particulièrement simple et rapide.

Il suffit d'abord de monter les éléments de charnière 1 en enfonçant, par exemple au marteau, leur embout 9 dans l'alésage correspondant d'élément de rambarde, orienté de manière à ce que le trou d'embout 41 corresponde au trou d'extrémité 43 de l'élément tubulaire de rambarde 3. La pièce en U 5 est ensuite montée en enfilant le boulon 37 dans chacune des extrémités 31 de ses branches puis en serrant l'écrou de boulon sur l'une des branches. Le montage est alors terminé.

L'articulation peut servir à déposer les éléments de rambarde en un minimum de place, par exemple au démontage de l'échafaudage, en les repliant parallèlement l'un à l'autre, articulés à chacune des extrémités des branches de la pièce en U.

A la mise en service, par exemple au montage de l'échafaudage, il suffit de rabattre les éléments de rambarde l'un vers l'autre, en ligne droite, les d'éléments de charnière viennent alors s'accoupler avec leur tête 11 l'une en regard de l'autre et il ne reste plus qu'à passer la goupille 7 dans le trou médian 39 de chacune des branches et dans les trous 21 d'axe des têtes. A ce moment, les éléments de rambarde sont verrouillés totalement l'un à l'autre dans la ligne des trois axes de l'assemblage, les deux articulations de la pièce en U et l'articulation centrale verrouillée par goupille. Pour démonter, il suffit simplement de dégoupiller.

L'invention a été décrite notamment pour une application à une articulation de rambarde d'échafaudage, mais elle peut être appliquée à tout autre domaine technique nécessitant une articulation de sécurité à montage et démontage rapides.

## Revendications

1. Articulation de sécurité notamment pour les rambardes d'échafaudage, constituées au moins de deux éléments tubulaires de rambarde (3) articulés l'un à l'autre, dressés l'un en continuité de l'autre en service et repliés en position hors service, **caractérisée en ce qu'**elle est constituée de deux éléments de charnière complémentaires (1) fixés chacun à l'une des extrémités opposées des éléments tubulaires de rambarde (3), et d'une pièce en U (5) pourvue d'au moins deux oreilles (31) opposées sur l'une au moins des branches (29) du U et articulées chacune à une des deux extrémités opposées des éléments tubulaires de rambarde (3) dans le plan de rotation (P) desdits éléments de charnière (1), la partie médiane (27) du U étant conformée pour bloquer l'articulation dans un sens d'appui du plan de rotation (P) verrouillant les éléments de rambarde (3) sensiblement l'un en continuité de l'autre, par exemple en ligne droite, et l'axe d'articulation (7) des éléments de charnière (1) est mobile et verrouille en service l'articulation, de sorte que les éléments de rambarde (3) sont verrouillés totalement en continuité l'un de l'autre en position de service, ledit axe mobile (7) pouvant être extrait des éléments de charnière (1) pour permettre de replier parallèlement les éléments de rambarde (3) en les articulant chacun à ladite au moins une oreille (31) de la pièce en U (5).

2. Articulation de sécurité selon la revendication 1, **caractérisée en ce que** la pièce en U (5) comporte quatre oreilles identiques (31), opposées deux à deux et articulées deux à deux respectivement aux extrémités des éléments tubulaires de rambardes (3).

3. Articulation de sécurité selon la revendication 1, **caractérisée en ce que** la pièce en U (5) comporte une partie en plat médian (27) et deux branches latérales (29) identiques, parallèles et perpendiculaires au plat médian (27), chacune des extrémités (31) des branches (29) étant à forme arrondie elliptique, reliée l'une à l'autre opposée par un segment droit médian (33).

4. Articulation de sécurité selon la revendication 3, **caractérisée en ce qu**'un trou médian (39) est formé sur chacune des branches (29) de la pièce en U (5), ce trou recevant avec le trou (39) en vis-à-vis de l'autre branche (29), ledit axe mobile (7) verrouillant la liaison.

5. Articulation de sécurité selon l'une des revendications 1-4, **caractérisée en ce que** ledit axe mobile est une goupille (7) à fil flexible de verrouillage (23).

6. Articulation de sécurité selon l'une des revendications 1-5, **caractérisée en ce que** la partie médiane du U (27) est orientée vers le haut pour verrouiller les éléments de rambarde (3) dans le sens d'appui utile, vers le bas, et le fil flexible (23) de la goupille est orienté vers le bas, à l'opposé, pour verrouiller en position l'axe (7) des éléments de charnière (1) .

7. Articulation de sécurité selon l'une des revendications 1-6, **caractérisée en ce que** les éléments de charnière (1) sont identiques l'un à l'autre pour chaque élément de rambarde (3), et issus de moulage en matière synthétique, ou alliage métallique léger comportant un embout de fixation arrière (9) et une tête d'articulation (11) à l'avant.

8. Articulation de sécurité selon la revendication 7, **caractérisée en ce que** chaque tête d'articulation (11) est destinée à venir sur un côté du plan transversal de rotation P de l'articulation pour coopérer avec la tête opposée (11) de l'élément de charnière (1) de l'autre côté du plan.

## Claims

1. A safety joint in particular for scaffolding railings, consisting at least of two tubular railing elements (3) articulated to one another, erected such that one forms a continuation of the other in service and folded when in the out-of-service position, **characterised in that** it consists of two complementary hinge elements (1) each fixed to one of the opposing ends of the tubular railing elements (3), and of a U-shaped member (5) provided with at least two opposing lugs (31) on one at least of the branches (29) of the U, said lugs (31) each being articulated to one of the two opposing ends of the tubular railing elements (3) in the plane of rotation (P) of said hinge elements (1), the median part (27) of the U being so shaped as to immobilise the joint in one bearing direction of the plane of rotation (P), locking the railing elements (3) one substantially as a continuation of the other, for example in a straight line, and the hinge bolt (7) of the hinge elements (1) is mobile and locks the joint when in service, in such a way that the railing elements (3) are locked wholly as continuations one of the other in the in-service position, said mobile bolt (7) being capable of being removed from the hinge elements (1) so as to allow the railing elements (3) to be folded in parallel, their each being articulated to said at least one lug (31) of the U-shaped member (5).

2. A safety joint according to claim 1, **characterised in that** the U-shaped member (5) comprises four identical lugs (31), arranged in opposing pairs and articulated in pairs respectively to the ends of the tubular railing elements (3).

3. A safety joint according to claim 1, **characterised in that** the U-shaped member (5) comprises a flat median part (27) and two identical side branches (29) parallel and perpendicular to the median flat part (27), each of the ends (31) of the branches (29) being elliptical and rounded in shape, one being connected to the other opposing one by a straight median segment (33).

4. A safety joint according to claim 3, **characterised in that** a median hole (39) is formed on each of the branches (29) of the U-shaped member (5), said hole receiving, with the opposite hole (39) in the other branch (29), said mobile bolt (7) locking the connection.

5. A safety joint according to any one of claims 1 to 4, **characterised in that** said mobile bolt is a locking pin (7) with flexible wire (23).

6. A safety joint according to any one of claims 1 to 5, **characterised in that** the median part of the U (27) is oriented towards the top to lock the railing elements (3) in the useful bearing direction, downwards, and the flexible wire of the pin is oriented towards the bottom, on the opposite side, to lock in position the bolt (7) of the hinge elements (1).

7. A safety joint according to any one of claims 1 to 6, **characterised in that** the hinge elements (1) are identical to one another in the case of each railing element (3), and are made by moulding from synthetic material or a light metal alloy to comprise a rear fixing piece (9) and a joint head (11) at the front.

8. A safety joint according to claim 7, **characterised in that** each joint head (11) is designed to arrive on one side of the transverse plane of rotation P of the joint to cooperate with the opposing head (11) of the hinge element (1) on the other side of the plane.

## Patentansprüche

1. Sicherheitsgelenk insbesondere für Geländer von Gerüsten, das
zumindest aus zwei röhrenförmigen Geländerelementen (3) gebildet ist, die gelenkig miteinander verbunden sind, wobei im Gebrauch das eine in der Fortsetzung des anderen ausgerichtet ist und sie sich außer Gebrauch in gefalteter Stellung befinden,
**dadurch gekennzeichnet, dass** es gebildet ist
aus zwei komplementären Scharnierelementen (1), von denen jedes an einem der gegenüberliegenden Enden der röhrenförmigen Geländerelemente (3) befestigt ist, und
aus einem U-Teil (5), das mit zumindest zwei Ösen (31) versehen ist, die sich auf zumindest einem der Arme (29) des U gegenüberliegen und von denen jede mit einem der zwei gegenüberliegenden Enden der röhrenförmigen Geländerelemente (3) gelenkig in der Drehebene (P) der Scharnierelemente (1) verbunden ist,
wobei der Mittelteil (27) des U daran angepasst ist, das Gelenk in einer Halterichtung der Drehebene (P) zu blockieren, wodurch die Geländerelemente (3) im Wesentlichen eines in der Fortsetzung des anderen verriegelt sind, beispielsweise in einer geraden Linie, und
die Gelenkachse (7) der Scharnierelemente (1) beweglich ist und im Gebrauch das Gelenk so verriegelt, dass die Geländerelemente (3) in der Gebrauchsstellung gänzlich eines in der Fortsetzung des anderen verriegelt sind, und
die Gelenkachse (7) aus den Scharnierelementen (1) herausgezogen werden kann, um zu ermöglichen, die Geländerelemente (3) parallel zu falten, indem jedes gelenkig zu der zumindest einen Öse (31) des U-Teils (5) bewegt wird.

2. Sicherheitsgelenk gemäß Anspruch 1, **dadurch gekennzeichnet, dass**
das U-Teil (5) vier identische Ösen (31) enthält, die einander zwei und zwei gegenüberliegen und die jeweils zwei und zwei gelenkig mit den Enden der röhrenförmigen Geländerelemente (3) verbunden sind.

3. Sicherheitsgelenk gemäß Anspruch 1, **dadurch gekennzeichnet, dass**
das U-Teil (5) einen flachen Mittelteil (27) und zwei identische Seitenarme (29) enthält, die parallel und senkrecht zu der Mittelplatte (27) sind, und
jedes der Enden (31) der Arme (39) eine elliptisch gerundete Form hat und das eine mit dem gegenüberliegenden anderen über ein gerades Mittelsegment (33) verbunden ist.

4. Sicherheitsgelenk gemäß Anspruch 3, **dadurch gekennzeichnet, dass**
ein Mittelloch (39) an jedem der Arme (29) des U-Teils (5) gebildet ist,
wobei dieses Loch mit dem gegenüberliegenden Loch (39) des anderen Arms (29) die bewegliche Achse (7) aufnimmt, die die Verbindung verriegelt.

5. Sicherheitsgelenk gemäß einem der Ansprüche 1 bis 4, **dadurch gekennzeichnet, dass**
die bewegliche Achse ein Stift (7) mit einem flexiblen Verriegelungsdraht (23) ist.

6. Sicherheitsgelenk gemäß einem der Ansprüche 1 bis 5, **dadurch gekennzeichnet, dass**
der Mittelabschnitt (27) des U nach oben gerichtet ist, um die Geländerelemente (3) in der nützlichen Halterichtung nach unten zu verriegeln, und
der flexible Draht (23) des Stifts im Gegensatz dazu nach unten gerichtet ist, um die Achse (7) der Elemente der Scharniere (1) in ihrer Stellung zu verriegeln.

7. Sicherheitsgelenk gemäß einem der Ansprüche 1 bis 6, **dadurch gekennzeichnet, dass** die Scharnierelemente (1) für jedes Geländerelement (3) identisch zueinander sind und gebildet sind aus einem Formguss eines synthetischen Materials oder einer leichten Metalllegierung und ein hinteres Befestigungsendstück (9) und vorne einen Gelenkkopf (11) enthalten.

8. Sicherheitsgelenk gemäß Anspruch 7, **dadurch gekennzeichnet, dass** jeder Gelenkkopf (11) dazu bestimmt ist, auf eine Seite der transversalen Drehebene (P) des Gelenks zu kommen, um mit dem gegenüberliegenden Gelenkkopf (11) des Scharnierelements (1) auf der anderen Seite der Ebene zusammenzuwirken.
